**Europäisches Patentamt**

**European Patent Office**

**Office européen des brevets**

(19)

(11) Publication number : **0 446 492 B1**

# (12) EUROPEAN PATENT SPECIFICATION

(45) Date of publication of patent specification :
30.11.94 Bulletin 94/48

(51) Int. Cl.⁵ : **H04L 12/56**

(21) Application number : **90200593.3**

(22) Date of filing : **14.03.90**

(54) Communication switching module.

(43) Date of publication of application :
18.09.91 Bulletin 91/38

(45) Publication of the grant of the patent :
30.11.94 Bulletin 94/48

(84) Designated Contracting States :
AT BE CH DE ES FR GB IT LI NL SE

(56) References cited :
WO-A-86/03355
US-A- 4 314 367
IEEE TRANSACTIONS ON COMMUNI-
CATIONS. vol. 36, no. 6, June 1988, NEW YORK
USpages 734 - 743; J.S. Turner: "Design of a
Broadcast Packet Switching Network"
IEEE Pacific Rim Conference on Communi-
cations, Computers and Signal Processing,-
June 1st- 2nd, 1989 Victoria,BC,Canada,pages
620-623, New York ,US; G.B.Mund et al.: "A
2x2 Switching Element for Broadband ISDN"
AT & T TECHNICAL JOURNAL. vol.68, no. 2,
March 1989, NEW YORK US pages 36 - 50; J.J.
Degan et al.: "FASTPACKET TECHNOLOGY
FOR FUTURE SWITCHES"

(73) Proprietor : **ALCATEL N.V.**
**Strawinskylaan 341,**
**(World Trade Center)**
**NL-1077 XX Amsterdam (NL)**
(84) **BE CH DE ES FR GB IT LI NL SE AT**
Proprietor : **BELL TELEPHONE**
**MANUFACTURING COMPANY Naamloze**
**Vennootschap**
**Francis Wellesplein 1**
**B-2018 Antwerp (BE)**
(84) **BE**

(72) Inventor : **Henrion, Michel André Robert**
**144 B Avenue Circulaire 24**
**B-1180 Brussels (BE)**

(74) Representative : **Vermeersch, Robert et al**
**BELL TELEPHONE MANUFACTURING**
**COMPANY**
**Naamloze Vennootschap**
**Patent Department**
**Francis Wellesplein 1**
**B-2018 Antwerpen (BE)**

## Description

The present invention relates to a communication switching module having inputs and outputs and being included in a module- stage of a multi- path self-routing switching network having input ports and output ports respectively coupled to the inputs of the switching modules of a first module- stage and to the outputs of the switching modules of a last module-stage of said switching network, said switching modules being able to transfer cells of information from any one of their inputs to at least one of their outputs and being built up with switching elements each having inlets and outlets and being able to transfer said cells of information from any one of its inlets to at least one of its outlets.

Such a communication switching module constituted by a single switching element is already known in the art, e.g. from the US patent 4,550,397. Therein the switching network is constituted by a plurality of interconnected module- stages each including a plurality of switching elements having a relatively small size, i.e. with a restricted number of inlets and outlets.

As well known in the art, it is both difficult and costly to realize a switching network of relatively large size, e.g. with several thousands of input ports and output ports, from switching elements of such small size because of the then required large number of module- stages and of switching elements per module- stage.

This typical problem is even more critical when the switching network is a broadband switching network operating at a very high bitrate and built up from switching elements each constituted by a Large Scale Integrated (LSI) circuit, due to the today's technological constraints with which one is then confronted. Indeed, in this case, on the one hand, interconnections between the switching elements are critical at such an high bitrate and, on the other hand, the power dissipation of such LSI circuits is excessively high.

In order to restrict the number of module- stages as well as the number of switching elements per module- stage of the switching network, it would be useful to have at one's disposal a switching element of a relatively larger size but unfortunately such a switching element is not realizable today.

An object of the present invention is to build from available switching elements of relatively smaller size a switching module which is equivalent to and has substantially the same cell traffic capabilities and performances as a virtual communication switching element of a relatively larger size.

According to the invention this object is achieved due to the fact that each switching module comprises a plurality of stages of said switching elements, said inputs and outputs being respectively coupled to inlets of the switching elements of a first stage and to outlets of the switching elements of a last stage of said switching module,

that each switching element has at least three outlets and that all its outlets are arranged in routing groups each comprising a number of said outlets to anyone of which a cell may be transferred,

that said switching module has at least three outputs and that all its outputs are arranged in module- routing groups each comprising a number of said outputs to anyone of which a cell may be transferred, each module- routing group including at least one routing group of at least one switching element of said last stage,

that the switching elements of a given stage are coupled to the switching elements of the following stage via bundles of Li links, each of said links being constituted by an outlet- to- inlet connection, and

that Li is at least equal to the number of the outlets comprised in the routing group having the smallest number of outlets that said switching element can sustain for realizing a predetermined minimum traffic performance at a predetermined maximum load on its outlets.

It can be proved that the obtained switching module has substantially the same cell traffic capabilities and performances as a single switching element of the same size, i.e. with the same number of inlets and outlets.

It is to be noted that the US patent 4,561,090 also discloses a switching module constituted by interconnected switching elements. Therein, the switching module only has 4 inputs and 4 outputs and includes 2 stages of 4 switching elements each. However, the switching elements of the first stage only have 1 inlet and 4 outlets, whilst those of the second stage have 4 inlets and only 1 outlet. Moreover, the outlets are not grouped in routing groups, the "bundles" each comprise only 1 link or outlet- to- inlet connection, and the switching network wherein this known switching module is used is not of the multi- path type.

Another characteristic feature of the present invention is that each switching element is provided with buffering means to latch said cells.

These buffering means are used to resolve contention between cells intended to a same routing group. They are engineered to achieve a given low cell loss probability for a worst case traffic which is characterized by a routing group having the minimum size, i.e. comprising the smallest number of outlets, and a maximum traffic load per outlet. The traffic load on each of the Li links constituting this minimum- size routing group is engineered to not exceed a predetermined maximum value, called maximum outlet load, at which said switching element can operate for the above given low cell loss probability.

In other words, the cell loss probability of this switching module is relatively very low even for an unbalanced or non-uniform cell flow distribution, e.g.

when all the cells from a given small number of inlets are to be routed to a given small number of outlets.

Also another characteristic feature of the present invention is that each cell of information is associated to a self- routing tag including routing data from which at least one of said routing groups is selected in each switching element.

Still another characteristic feature of the present invention is that each of said stages includes k of said switching elements each having EO outlets,

that each switching element of a stage is connected to each switching element of the following stage via said Li links, and

that Li is equal to EO divided by k.

The invention may also be characterized by the fact that said switching module includes three stages.

The invention may still be characterized by the fact that for each switching element of said first stage of said switching module the traffic of cells of information is distributed over all its outlets, whereby a cell may be transmitted to anyone of the switching elements of the second stage of said switching module.

Thus the switching elements of the first stage of a switching module perform full cell traffic distribution over all the switching elements of the second stage thereof.

The invention may also be characterized by the fact that said inputs of said switching module are arranged in input groups each comprising a number Le of said inputs, so that a cell supplied to a given switching module of said switching network via a given input group can be received at anyone of the Le inputs thereof,

that Le is a multiple of k,

that an input group is connected to the k switching elements of the first stage of said switching module via Le divided by k inlets of each of said switching elements of said first stage, and

that said switching module only comprises two stages wherein the routing of the cells to a destination module- routing group is performed by executing a routing function to a routing group of each switching element of said first and of said second stage of said switching module, said routing function being derived from said self- routing tag associated to said cell.

An alternative characteristic of this invention is that said inputs of said switching module are arranged in input groups each comprising a number Le' of said inputs, so that a cell supplied to a given switching module of said switching network via a given input group can be received at anyone of the Le' inputs thereof,

that Le' is a sub- multiple of k,

that an input group is connected to Le' switching elements of the first stage of a switching module via a single inlet of each of said switching elements of said first stage, and

that said switching module only comprises two stages wherein the routing of the cells to a destination module- routing group is performed by executing a routing function to a routing group of each switching element of said first and of said second stage of said switching module, said routing function being derived from said self- routing tag associated to said cell.

These last characteristics allow to reduce the number of stages of switching elements in the switching module.

Another characteristic feature of the invention is that said switching module has its inputs and its outputs each split- up into a first set and a second set, a cell being either transferred from an input of the first/ second set of inputs to an output of the first/ second set of outputs according to a first/ second transfer direction, or transferred from an input of the first/ second set of inputs to an output of the second/ first set of outputs according to a third/ fourth transfer direction respectively.

In this way, the communication switching module may be used in a bidirectional way as will become clear from the description.

Also another characteristic feature of the switching module of the invention is that each switching element has its inlets and its outlets each split- up into a first set and a second set, a cell being either transferred from an inlet of the first/ second set of inlets to an outlet of the first/ second set of outlets according to said first/ second transfer direction, or transferred from an inlet of the first/ second set of inlets to an outlet of the second/ first set of outlets according to said third/ fourth transfer direction respectively,

that said first/ second set of inputs is connected to said first/ second sets of inlets of the switching elements of the first stage, and that said first/ second sets of outlets of the switching elements of the last stage of a switching module are connected to said first/ second set of outputs thereof respectively.

In this way, a cell of information can either be transferred from the first/ second set of inputs of a switching module to the first/ second set of outputs thereof according to the first/ second transfer direction by using the first/ second sets of inlets and the first/ second sets of outlets of the switching elements thereof respectively, or can be transferred according to the third/ fourth transfer direction - then called "reflection" - by using the first/ second sets of inlets and the second/ first sets of outlets of these switching elements respectively.

Still another characteristic feature of the switching module of the invention is that each switching element of a first stage has its inlets split- up into a first set and a second set of inlets respectively connected to said first and to said second set of inputs of said switching module,

that each switching element of the last stage has its outlets split- up into a first set and a second set of outlets respectively connected to said first and to said second set of outputs of said switching module, and

that a cell is transferred through said switching module according to said first/ second transfer direction, or to said third/ fourth transfer direction according to a direction indicator included in the self- routing tag associated to said cell.

This allows the switching elements of the last stage of a switching module to route a cell to at least one routing group of either the first or the second set of outlets and thereby to either the first or the second set of outputs of the switching module respectively according to the cell transfer direction indicator without requiring the split of the internal links of Li connections interconnecting the switching elements of two successive stages into a first and a second set of internal links.

The invention may also be characterized by the fact that said switching module includes a control logic able to convert first routing mode parameters assigned to each type of cell transfer through a switching module of a particular module- stage of the switching network into second routing mode parameters assigned to each switching element of this switching module in function of the internal arrangement of said switching elements into said switching module and of the location of said switching module into said switching network.

The switching module can thus be used as the equivalent of a large size switching element, i.e. with a large number of inlets and outlets, in order to constitute any of the various module- stages of the multi- path self- routing switching network. Indeed, owing to the control logic forming part of each switching module, the configuration of this switching network can be defined and operated only by means of the external characteristic or first routing mode parameters assigned to the switching modules thereof (considered as large size switching elements) without depending on the internal structure and realization of these switching modules. An advantage of this feature is that when the internal arrangement of switching elements forming the switching module is modified, there is no need to modify the multi- stage switching network configuration structured with switching modules which are able to use the same first routing mode parameters. Indeed, in each switching module these first routing mode parameters are internally converted in a new set of second routing mode parameters suitable for the new internal arrangement and realization of the switching elements.

Another feature of the invention is that said switching module is built on a printed board assembly carrying a plurality of switching elements.

Also another feature of the invention is that each of said switching elements is built on an integrated electronic circuit.

It is expected that the evolution of today's technology will be such that the physical size of a Printed Board Assembly (PBA) will remain fairly constant over a relatively long period, whereas on the contrary the complexity and the physical size of an integrated switching element will vary (increase) much faster in time. On the other hand, if in the future the number of inlets and outlets of an integrated switching element increases, it may be reasonably expected that the physical size of the Large Scale Integrated (LSI) circuit constituting it increases accordingly. Therefore, the physical size requested for a particular switching module, i.e. the physical size of a printed board assembly, will remain substantially the same although the switching elements constituting it and their arrangement to form this switching module may be modified.

The above mentioned and other objects and features of the invention will become more apparent and the invention itself will be best understood by referring to the following description of an embodiment taken in conjunction with the accompanying drawings wherein :

Fig. 1 shows a three stages communication switching module SM according to the invention;

Fig. 2 shows a two stages communication switching module SM′ which is a variant of the switching module SM of Fig. 1;

Fig. 3 shows a switching network SN wherein the switching modules SM or SM′ are used;

Fig. 4 shows a two stages communication switching module SM″ which is another variant of the switching module SM of Fig. 1;

Fig. 5 show a possible connection scheme of the switching module SM used in a bidirectional way; and

Fig. 6 shows the switching module SM′ of Fig. 2 with auxiliary circuitry thereof.

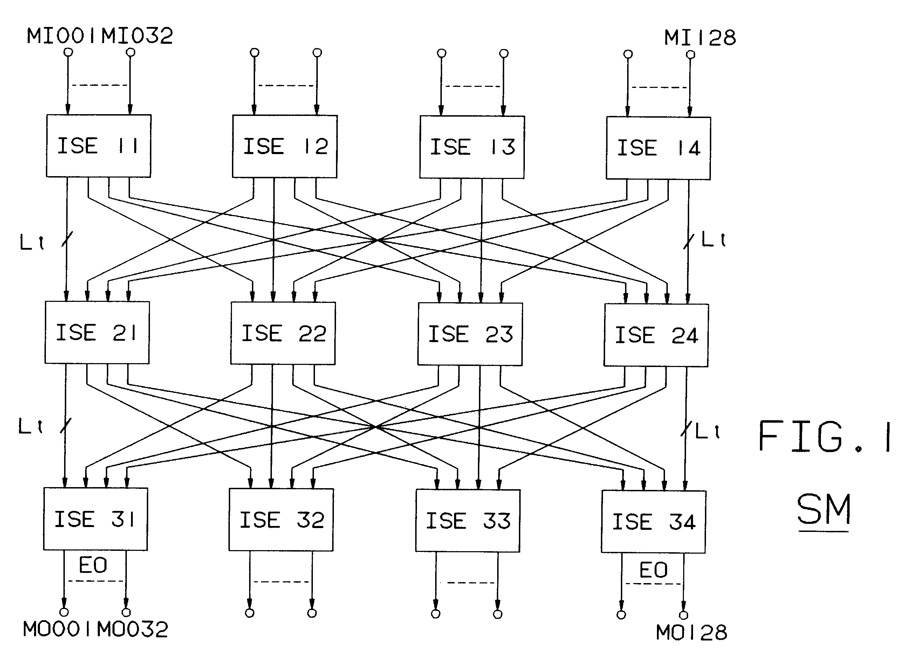

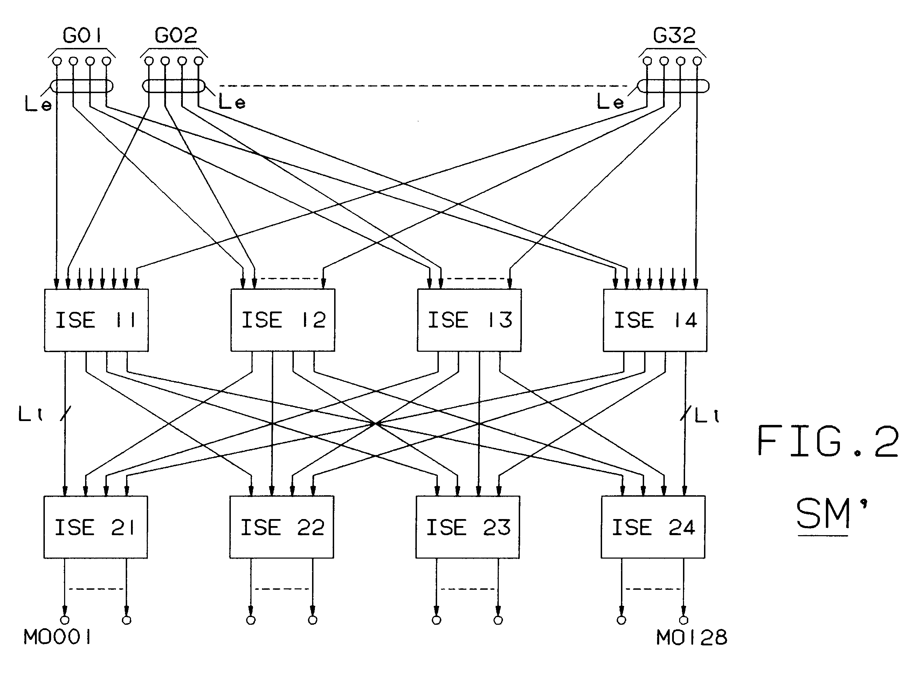

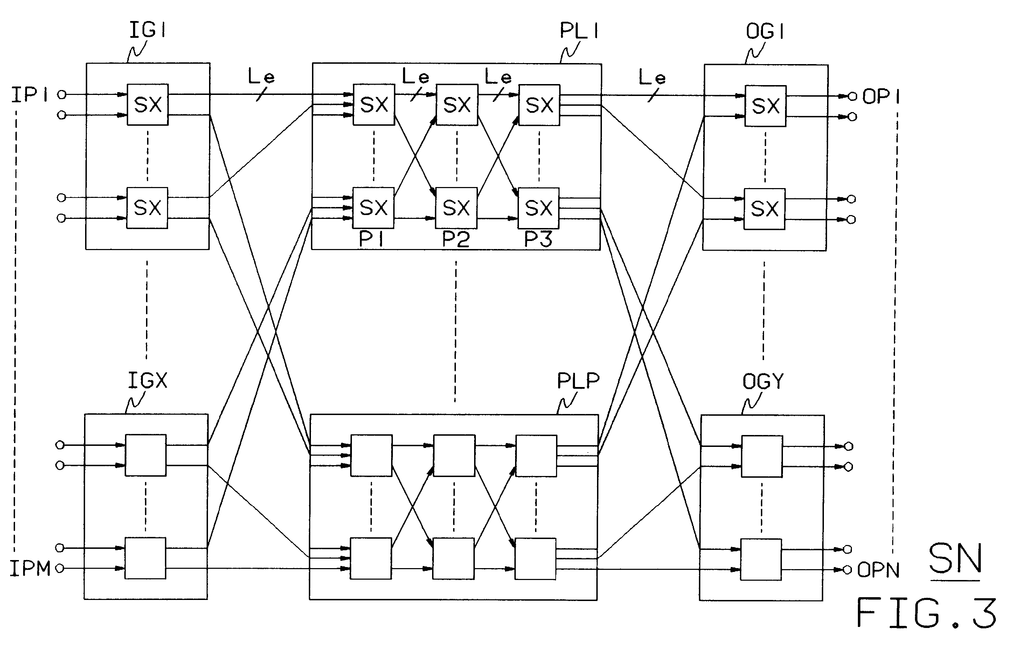

The communication switching module SM shown in Fig. 1 or a variant SM′ thereof shown in Fig. 2 forms part of a module- stage of a multi- path self- routing switching network SN such as shown in Fig. 3 and disclosed in the co- pending patent application filed on the same date as the present invention and entitled "RESEAU DE COMMUTATION A TRAJETS MULTIPLES ET A AUTO- ACHEMINEMENT POUR LA COMMUTATION DE CELLULES A MULTIPLEXAGE TEMPOREL ASYNCHRONE". More particularly, each switching matrix SX thereof may either be constituted by a switching module SM or, preferrably, by its variant SM′ as will become clear later.

The switching network SN is a digital telecommunication switching network used to transfer cells or packets of information under the form of digital signals from any of its input ports IP1 to IPM to one or more of its output ports OP1 to OPN. SN has for instance a folded multi- plane structure and is built- up by means of switching matrices SX arranged in incoming groups of matrices IG1 to IGX, switching planes PL1 to PLP and outgoing groups of matrices OG1 to OGY interconnected as shown by bundles of Le external links or interconnections between each switching matrix SX of successive module- stages, e.g. P1- P2- P3, of this switching network SN. Each switching matrix SX may be constituted by a switching element such as disclosed in the patent application PCT/EP89/000942. This switching element then operates according to a routing logic as disclosed in the co- pending patent application filed on the same date as the present one and entitled "ROUTING LOGIC MEANS FOR A COMMUNICATION SWITCHING ELEMENT".

A particularity of this switching element is that the outlets thereof are arranged in several output groups called "routing groups" and that a cell received at an inlet of this switching element is transmitted to one - or more in case of multicast - of these routing groups instead of to be transmitted to a single outlet. It is to be noted that the cell may then exit at anyone of the outlets forming part of its destination routing group.

In order to realize a very large switching network SN, i.e. with several thousands of input ports IP1 to IPM and output ports OP1 to OPN, switching elements of large "size", i.e. with a large number of inlets and of outlets, are required. However, the switching elements are built on a Large Scale Integrated LSI circuit and the today's technology constraints does not allow to realize switching elements with more than, e.g. 32 inlets and 32 outlets. This problem will be solved by using as switching matrix SX the switching module SM which is a sub- network of realizable switching elements arranged in such a way that this switching module SM behaves as a virtual switching element of large size, e.g. with 128 inlets and 128 outlets hereafter called inputs and outputs respectively.

Such a switching module SM is shown in Fig. 1. SM has 128 inputs MI001 to MI128 and 128 outputs MO001 to MO128 and comprises three stages of k = 4 switching elements each, namely ISE11-14, ISE21-24 and ISE31-34. Each switching element ISE11/14 of the first stage has 32 inlets connected to 32 distinct inputs, e.g. MI001 to MI032, of the switching module SM and has EO = 32 outlets arranged in 4 bundles of Li = 8 outlets. The switching elements ISE21-24 of the second stage have their 32 inlets split- up into 4 bundles of Li = 8 inlets each. Similarly, their EO = 32 outlets are also split- up into 4 bundles of Li = 8 outlets each. Finally the switching elements ISE31-34 of the third and last stage have their 32 inlets split- up into 4 bundles of Li = 8 inlets each, whereas each of their EO = 32 outlets is connected to an output, e.g. MO001/032, of the switching module SM. Each switching element ISE11-14/ ISE21-24 of the first/ second stage is connected to each switching element ISE21-24/ ISE31-34 of the following stage via one of the above bundles respectively. These outlet- to- inlet connections are thus realized by means of bundles of Li = 8 links each.

It is also to be noted that the above mentioned size, i.e. maximum 32 inlets and 32 outlets, of the switching element ISE built on an LSI circuit is mainly limited by the volume occupied by cell buffering means forming part thereof. These cell buffering means are necessary to latch the cells during their transfer through the switching element for resolving possible contention problems between cells intended to a same destination or routing group. However, the volume occupied by these buffering means decreases when the number of outlets constituting each routing group increases. Indeed, as mentioned above, a cell having a particular routing group as destination may be transferred to any outlet forming part of this routing group whereby there is no need to latch this cell when at least one of these outlets is free.

The worst case is thus defined by an engineered maximum cell traffic load on each outlet of a routing group and by the "smallest" routing group, i.e. having the smallest or minimum number of outlets which provides the required cell loss probability performance. As an example, the cell buffering means are dimensioned to achieve a very low cell loss probability of $10^{-10}$, for this worst case.

In the present example, one assumes that routing groups of 8 outlets match with such acceptable traffic performances in each switching element ISE of the switching module SM. It is to be noted that in this case each routing group corresponds to an above bundle of Li = 8 outlets, i.e. to the internal links or outlet- to- inlet connections of the switching elements ISE in the switching module SM.

Since the switching module SM has to operate as an equivalent single virtual switching element of large size, e.g. with 128 inputs and 128 outputs, it has to realize similar cell traffic performances. This means that the switching module SM must also have a very low cell loss probability for any cell traffic flow between its 128 inputs and 128 outputs.

To this end, the switching elements ISE11-14 of the first stage perform full "distribution" of the cell traffic over all the switching elements ISE21-24 of the second stage. This "distribution" means that a cell received at any inlet of a switching element ISE11-14 of the first stage may be transferred to any of the four routing groups thereof and thereby also to any of the 32 outlets thereof. Conversely, the switching elements ISE21-24 of the second stage perform "routing" of the cells to appropriate routing groups thereof in order to transfer each cell to one of the switching elements ISE31-34 of the third stage which is connected to the destination output of the switching module SM for this cell.

It is to be noted that, as for the switching elements, the outputs MO001/128 of the switching module SM are also arranged in routing groups called "module- routing groups". The switching module SM may thus for instance be constituted by 16 module-routing groups of 8 outputs each.

More generally, for a switching module SM having a size N x N, e.g. 128 inputs x 128 outputs, and built-up with a sub- network of switching elements ISE having a size n x n, e.g. 32 inlets x 32 outlets, each stage of this sub- network comprises k = N/n, i.e. 4 = 128/32, switching elements ISE and the bundles between the switching elements of two successive stages each comprise Li = n/k, i.e. 8 = 32/4, internal links or outlet- to- inlet connections. Additionally the "minimum" routing group size, i.e. the size of the smallest routing group, has to be lower than or equal to Li. Consequently, it can be proved that, if Lim is the minimum routing group size engineered as above for a switching element ISE, the maximum capacity achievable for the switching module SM is Nmax = $n^2$/Lim, i.e. 128 = $32^2$/8.

Conversely, a switching module SM only provided with two stages of switching elements ISE instead of three would lead to an excessive cell traffic load on the internal links between these two stages in some non-uniform cell traffic flow cases between inputs and outputs.

It is however possible to realize a switching module with a reduced number of stages of switching elements ISE when the inputs of this switching module are themselves grouped in "input groups" linked to corresponding module- routing groups from switching modules of the previous module- stage in the switching network SN.

An example of a two- stages switching module SM' is shown in Fig.2. The 128 inputs of SM' are arranged in 32 input groups G01 to G32 each comprising Le = 4 inputs and are connected to corresponding ones of the above bundles of the switching network SN which are formed by a same number Le of external links. These Le inputs of each input group G01/32 are evenly distributed over the k = 4 switching elements ISE11-14 of the first stage of SM'. In other words, each input group G01/32 is connected to each switching element ISE11-14 of the first stage of SM' via Le/k = 1 link.

Such a two- stages switching module SM' is for instance preferred to the above three- stages switching module SM for being used in the multi- path self-routing switching network SN shown in Fig. 3 and disclosed in the above mentioned co- pending patent application relating thereto. In the latter, the switching network SN is based on the principle of "systematical randomization" of the cell traffic over all the Le external links of each module- routing group. This means that the load of the cell traffic flow from each switching module of a previous module- stage is automatically evenly spread over all the switching elements ISE11-14 of the first stage of the switching modules SM' of the following module- stage in this switching network SN. In this case, the stage of switching elements performing "distribution", i.e. the first stage of switching elements ISE11-14 in the three- stages switching module SM of Fig. 1, can be eliminated. As a result, the three stages of the switching module SM can be reduced to the only two stages of the preferred switching module SM' of Fig. 2 while still satisfying the above conditions of performance even in the case of un-balanced or non-uniform cell traffic distribution.

More generally, in the switching module SM' the number Le of external links of each input group must be equal to or a multiple of the number k of switching elements ISE11-14 of the first stage over which the Le links of these input groups have to be distributed.

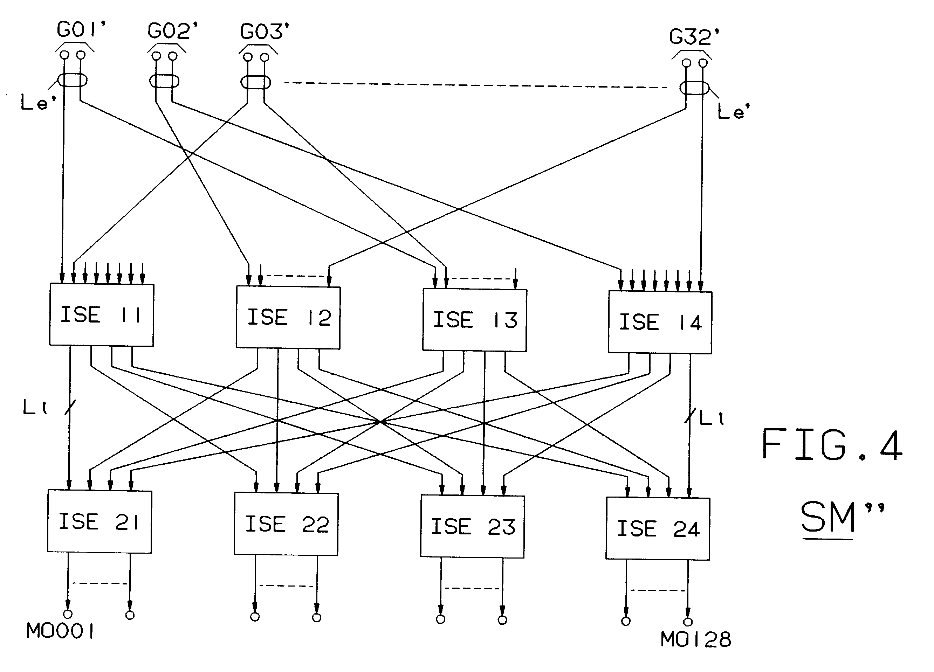

However, when the number of external links, say Le', is smaller than k, a possible solution is to split these Le' links of each input group over only part of the k switching elements ISE11-14 of the first stage, e.g. one out of two switching elements. This is the case of the switching module SM" shown in Fig. 4 and which has 64 input groups G01' to G64' of Le' = 2 inputs each, k being still equal to 4.

The size N x N of 128 inputs x 128 outputs of the described switching modules SM, SM' or SM" has been chosen to remain relatively stable in the time and thus also in the future. Indeed, such a switching module actually comprising 8 (for SM' or SM") or 12 (for SM) switching elements ISE, each built on a single LSI circuit, may be implemented on a standard Printed Board Assembly (PBA) and it is expected that the evolution of the today's technology will be such that the physical size of such a printed board assembly will remain fairly constant over a relatively long period of time whereas on the contrary the complexity and the physical size of an LSI circuit will vary (increase) much faster in time. This means that the switching module will remain constantly compatible with the existing equipment even when the size of the switching elements, i.e. the number of inlets and outlets, thereof will increase and that consequently the amount of switching elements for forming a switching module will decrease. In other words, the physical size of a switching module is expected to remain constant even when its internal sub- network will be modified due to variations of the size and of the number of switching elements constituting it.

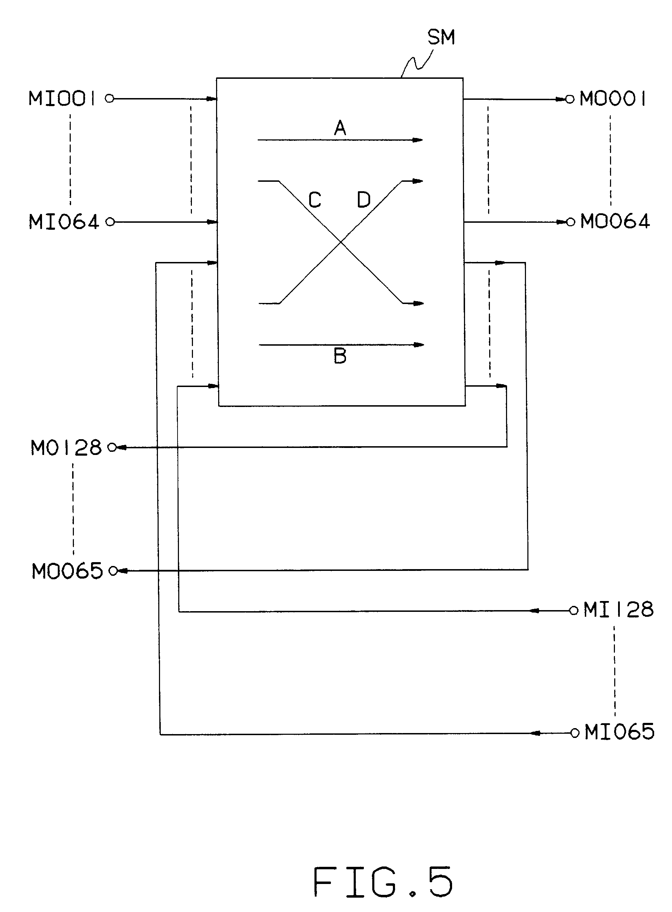

Until now, the above described switching modules SM, SM' and SM" with 128 inputs and 128 outputs have only been considered as "unidirectional". However, they may become "bidirectional" switching modules with for instance 64 inputs and 64 outputs for each cell transfer "direction" as schematically represented in Fig. 5. This bidirectionality may for instance be obtained by sub-dividing the inputs and the outputs of the switching module, say SM, into two distinct sets of 64 inputs and 64 outputs each, e.g. on an odd-/ even basis of an input/ output number allocated thereto, or of a corresponding input/ routing group number. Another possibility, shown in Fig. 5, is to subdivide the 128 inputs and the 128 outputs of SM into a first and a second set each, the first set of inputs/ outputs comprising the inputs MI001 to MI064/ outputs MO001 to MO064, whilst the second set of inputs/ outputs comprising the inputs MI065 to MI128/ outputs MO065 to MO128 respectively. A cell routed from the first set of inputs MI001-064 to the first set of outputs MO001-064 is said to be transferred according to a first direct transfer direction A, whilst a cell roused from the second set of inputs MI065-128 to the second set of outputs MO065-128 is said transferred according to a second direct transfer direction B. On the other hand, a cell routed from the first/ second set of inputs to the second/ first set of outputs is said to be "reflected" according to a reflected transfer direction C/ D respectively.

This bidirectionality of the switching module SM is however only possible because each switching element ISE constituting it is also able to operate in such a bidirectional way according to the same principle of sub-division mentioned above and also disclosed in the above mentioned patent application relating to the switching element. In more detail, the switching elements ISE11-14 of the first stage of the switching module SM have their inlets allocated to the first or to the second set of inputs depending for instance on the number to these inlets. The same applies to the outlets of the switching elements of the last stage of the switching module SM. Additionaly, each bundle of Li internal links between the switching elements of two successive stages of the switching module SM may be divided into two groups of Li/2 internal links or outlet- to- inlet connections, each of these groups corresponding to one of the above sets of inputs and outputs. In this case, the number of links in the "smallest routing group" that the switching element can accept for the worst case has to be lower or equal to Li/2.

Alternatively, in order to avoid the splitting of all bundles of Li internal links between switching elements into two groups of Li/2 links, it may be sufficient that the switching elements ISE21-24 or ISE31-34 of the last stage of this switching module SM route a cell to the outputs belonging either to the first or to the second set of outputs thereof. The direct or reflected transfer of the cell in the switching elements of the last stage, as derived by the routing logic from the analysis of the routing data associated to the cell, may then operate on a direction indicator, e.g. an incoming/ outgoing bit, associated to the cell.

If a direct transfert is selected by the routing logic, the routing operation applies either to the incoming or to the outgoing set of outputs as indicated by this direction indicator. On the other hand, if a reflected transfer is selected by the routing logic, the routing operation applies to the transfer direction which is opposite to the one given by the direction indicator, i.e. which has then to be inverted.

The determination of direct or reflected transfer by the routing logic is explained in more detail in the above mentioned co- pending patent application relating to the routing logic for a switching element and is also applicable to the present switching module SM.

Although only the splitting- up of the outlets and of the outputs in a first and in a second set is mentioned above, it is to be noted that the latter subsequently applies in a similar way to the splitting- up the routing groups and of the module- routing groups respectively.

The last mentioned patent application relating to the routing logic also discloses that a self- routing tag (SRT) associated to a cell transmitted through the switching network SN includes a routing- control-code (RCC) which is indicative of a particular sequence of routing functions to be executed by the successive switching elements ISE of this switching network SN through which the cell is transferred. Such a sequence of routing functions is called a "transfer pattern". This means that a same routing-control- code may lead to the execution of different routing functions in different switching elements ISE through which the cell is routed. In other words, the routing- control- code is indirectly indicative of the routing function to be executed in each switching element ISE for a given transfer pattern. The routing parameters of the routing function to be executed in a particular switching element ISE are obtained by using the routing- control- code as a pointer to select a data word stored in a routing- control- code translation memory (RCCTM) included in each switching element ISE. The routing parameters included in the selected data word may for instance be constituted by a routing- type code, a reflection indicator and at least one routing- mode parameter.

The routing- type code indicates the kind of routing function to be executed by the switching element ISE. Possible kinds or types of routing functions are :
- "group- routing" : when the cell has to be transferred from an inlet to a selected routing group of the switching element ISE;
- "multicast- routing" : when the cell has to be transferred to a plurality of routing groups;
- "distribution" : when the cell may be transferred to anyone of the possible routing groups, i.e. to anyone of the outlets of the switching element ISE;
- "physical- routing" : when the cell has to be transferred to a predetermined single outlet instead of to a routing group; and
- "dedicated- routing" : when the cell has to be transferred from an inlet to an additional dedicated outlet which is only used for special control purposes.

The routing- mode parameter indicates, in accordance with the reflection indicator and the initial incoming/ outgoing direction (derived from the inlet number or given by the above direction indicator bit associated to the cell), i.e. in function of the transfer direction A, B, C or D to be used, the address or identity of, e.g., the routing group to be selected as destination for the cell.

All the information contained in the data words of the routing- control- code translation memory is function of the type of a switching network SN used and of the location of each switching element ISE within this switching network SN.

The latter location is for instance defined by a number corresponding to the identification of the module- stage within the switching network SN to which the switching module SM belongs and by a number corresponding to the position of this switching element SM within this module- stage.

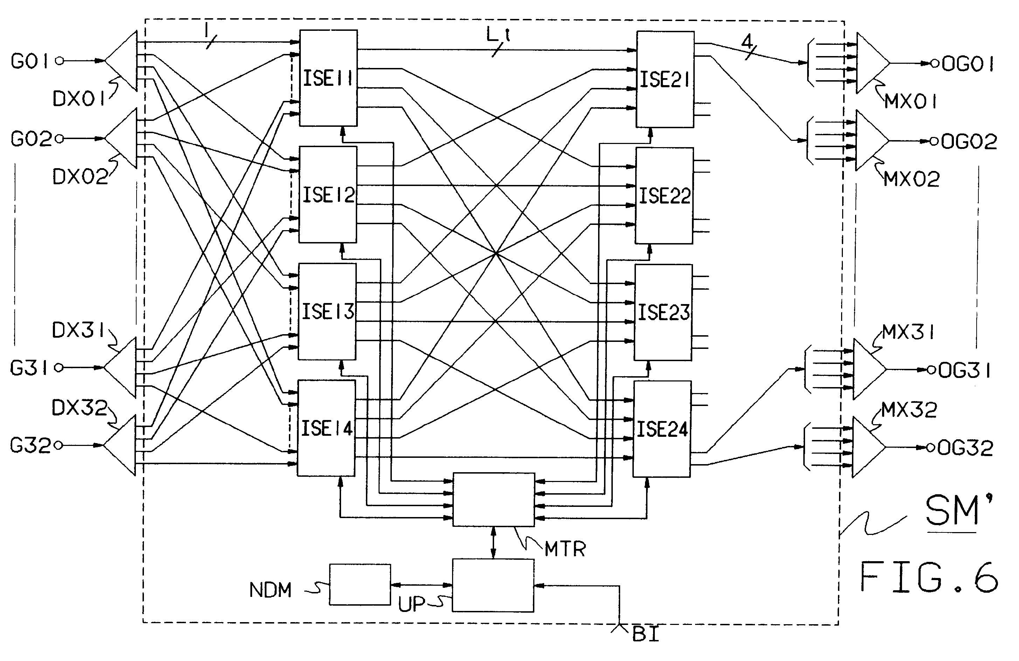

Since the switching module SM is constituted by a sub- network of switching element ISE and has to behave as a virtual large size switching element whatever the internal arrangement or architecture thereof, this switching module SM must be able to handle the above routing- control- code included in the self- routing tag of the cells received therein. This is possible owing to auxiliary circuitry which is shown in Fig. 6 wherein it is associated to the switching module SM' of Fig. 2 as an example.

The auxiliary circuitry may be mainly constituted by a control logic or microprocessor unit UP, a network data memory NDM and a maintenance routiner MTR which are all built on the same printed board assembly (PBA) as the switching module SM'.

The network data memory NDM stores network information which is constituted by data characteristic of the type of switching network SN to which the switching module SM' belongs, e.g. some configuration of a multi- path multi- stage self- routing folded switching network SN. This network information may be transmitted to the microprocessor unit UP to which the network data memory NDM is connected. On the other hand, the microprocessor unit UP is further connected to a control terminal BI of the printed board assembly and which is plugged in a connector, e.g. on a backpanel of the switching network SN, whereat the above module- stage number and position number of this switching module SM' is provided. With both the network information received from the network data memory NDM and the numbers received via the control terminal BI, the microprocessor unit UP is able to generate the above data words to fill the routing- control- code translation memories of each switching element ISE11-14; ISE21-24 of the switching module SM'. To this end, the microprocessor unit UP is connected to each of these switching elements ISE11-14; ISE 21-24 via the maintenance routiner MTR which is used as an interface unit for loading the generated data words into the memories of the appropriate switching elements. In practice, all the switching elements ISE11-14 of the first stage of the switching module SM' are provided with identical data words to fill their routing- control- code translation memory as well as all the switching elements ISE21-24 of the second stage of this switching module SM'.

It is to be noted that the loading of the routing-control- code translation memories of the switching elements ISE11-14 and ISE21-24 occurs during an initialization phase of the switching network SN.

It is also to be noted that the network data memory NDM may either be a permanent memory storing the above network information or a random- access memory wherein this network information is loaded during the initialization phase of the switching network SN. In this last case, the network information is provided to the network data memory NDM by means of control cells transferred through the switching network SN and received by one of the switching elements of the switching module SM'. These control cells are then routed from this switching element to the network data memory NDM via the maintenance routiner MTR and the microprocessor unit UP.

Still referring to Fig. 6, the above mentioned bundles of Le external links, e.g. 32 bundles of Le = 4 links each, constituting the input groups G01 to G32 of the switching module SM' may each be replaced by a single wire carrying a 4-channel multiplexed signal. Then, at the input of the switching module SM', these signals are demultiplexed by demultiplexers DX01 to DX32, each of these demultiplexers DX01/32 having 4 outputs connected to distinct switching elements ISE11-14 of the first stage of SM'. Similarly, at the output of the switching module SM' the signals, i.e. the cells, at the outlets of the switching elements ISE21-24 of the last stage are multiplexed by multiplexer MX01 to MX32 so as to form module- routing groups OG01 to OG32 as shown.

While the principles of the invention have been described above in connection with specific apparatus, it is to be clearly understood that this description is made only by way of example and not as a limitation on the scope of the invention.

## Claims

1. Communication switching module (SM, SM', SM") having inputs and outputs and being included in a module- stage of a multi- path self- routing switching network (SN) having input ports and output ports respectively coupled to the inputs of the switching modules of a first module- stage and to the outputs of the switching modules of a last module- stage of said switching network, said switching modules being able to transfer cells of information from any one of their inputs to at least one of their outputs and being built up with switching elements (ISE) each having inlets and outlets and being able to transfer said cells of information from any one of its inlets to at least one of its outlets,

characterized in that each switching module (SM, SM′, SM″) comprises a plurality of stages (ISE11-14; ISE21-24; ISE31-34) of said switching elements (ISE), said inputs and outputs being respectively coupled to inlets of the switching elements of a first stage (ISE11-14) and to outlets of the switching elements of a last stage (ISE21-24; ISE31-34) of said switching module (SM, SM′, SM″),

in that each switching element (ISE) has at least three outlets and that all its outlets are arranged in routing groups each comprising a number of said outlets to anyone of which a cell may be transferred,

in that said switching module (SM, SM′, SM″) has at least three outputs and that all its outputs are arranged in module- routing groups each comprising a number of said outputs to anyone of which a cell may be transferred, each module-routing group including at least one routing group of at least one switching element of said last stage (ISE21-24; ISE31-34),

in that the switching elements of a given stage (ISE11-14; ISE21-24) are coupled to the switching elements of the following stage (ISE21-24; ISE31-34) via bundles of Li (8) links, each of said links being constituted by an outlet- to- inlet connection, and

in that Li (8) is at least equal to the number of the outlets comprised in the routing group having the smallest number of outlets that said switching element (ISE) can sustain for realizing a predetermined minimum traffic performance at a predetermined maximum load on its outlets.

2. Communication switching module (SM, SM′, SM″) according to claim 1, characterized in that each switching element is provided with buffering means to latch said cells.

3. Communication switching module (SM, SM′, SM″) according to claim 1, characterized in that each cell of information is associated to a self-routing tag including routing data from which at least one of said routing groups is selected in each switching element (ISE).

4. Communication switching module (SM, SM′, SM″) according to claim 1, characterized in that each of said stages (ISE11-14; ISE21-24; ISE31-34) includes k (4) of said switching elements (ISE) each having EO (32) outlets, in that each switching element of a stage (ISE11-14; ISE21-24) is connected to each switching element of the following stage (ISE21-24; ISE31-34) via said Li (8) links, and

in that Li (8) is equal to EO (32) divided by k (4).

5. Communication switching module (SM) according to claim 1, characterized in that said switching module (SM) includes three stages (ISE11-14; ISE21-24; ISE31-34).

6. Communication switching module (SM) according to the claims 4 and 5, characterized in that for each switching element of said first stage (ISE11-14) of said switching module (SM) the traffic of cells of information is distributed over all its outlets, whereby a cell may be transmitted to anyone of the switching elements of the second stage (ISE21-24) of said switching module (SM).

7. Communication switching module (SM) according to the claims 3 and 6, characterized in that the routing of the cells to a destination module- routing group is performed by executing a routing function to a routing group of each switching element of said second (ISE21-24) and of a third stage (ISE31-34) of said switching module (SM), said routing function being derived from said self-routing tag associated to said cell.

8. Communication switching module (SM′) according to the claims 3 and 4, characterized in that said inputs of said switching module (SM′) are arranged in input groups (G01-32) each comprising a number Le (4) of said inputs, so that a cell supplied to a given switching module (SM′) of said switching network (SN) via a given input group (G01/32) can be received at anyone of the Le (4) inputs thereof,

in that Le (4) is a multiple of k (4),

in that an input group (G01/32) is connected to the k (4) switching elements of the first stage (ISE11-14) of said switching module (SM′) via Le (4) divided by k (4) inlets of each of said switching elements of said first stage (ISE11-14), and

in that said switching module (SM′) only comprises two stages (ISE11-14; ISE21-24) wherein the routing of the cells to a destination module- routing group is performed by executing a routing function to a routing group of each switching element of said first (ISE11-14) and of said second stage (ISE21-24) of said switching module (SM′), said routing function being derived from said self- routing tag associated to said cell.

9. Communication switching module (SM″) according to the claims 3 and 4, characterized in that said inputs of said switching module (SM″) are arranged in input groups (G01′-64′) each comprising a number Le′ (2) of said inputs, so that a cell supplied to a given switching module (SM″) of said switching network (SN) via a given input group (G01′/64′) can be received at anyone of the Le′ (2) inputs thereof,

in that Le′ (2) is a sub- multiple of k (4),

in that an input group (G01′/64′) is connected to Le′ (2) switching elements of the first stage (ISE11-14) of a switching module (SM″) via a single inlet of each of said switching elements of said first stage (ISE11-14), and

in that said switching module (SM″) only comprises two stages (ISE11-14; ISE21-24) wherein the routing of the cells to a destination module- routing group is performed by executing a routing function to a routing group of each switching element of said first (ISE11-14) and of said second stage (ISE21-24) of said switching module (SM″), said routing function being derived from said self- routing tag associated to said cell.

10. Communication switching module (SM, SM′, SM″) according to claim 1, characterized in that said switching module (SM, SM′, SM″) has its inputs and its outputs each split- up into a first set and a second set, a cell being either transferred from an input of the first/ second set of inputs to an output of the first/ second set of outputs according to a first (A)/ second (B) transfer direction, or transferred from an input of the first/ second set of inputs to an output of the second/ first set of outputs according to a third (C)/ fourth (D) transfer direction respectively.

11. Communication switching module (SM, SM′, SM″) according to claim 10, characterized in that each switching element (ISE) has its inlets and its outlets each split- up into a first set and a second set, a cell being either transferred from an inlet of the first/ second set of inlets to an outlet of the first/ second set of outlets according to said first (A)/ second (B) transfer direction, or transferred from an inlet of the first/ second set of inlets to an outlet of the second/ first set of outlets according to said third (C)/ fourth (D) transfer direction respectively,

in that said first/ second set of inputs is connected to said first/ second sets of inlets of the switching elements of the first stage (ISE11-14), and that said first/ second sets of outlets of the switching elements of the last stage (ISE21-24; ISE31-34) of a switching module (SM, SM′, SM″) are connected to said first/ second set of outputs thereof respectively.

12. Communication switching module (SM, SM′, SM″) according to the claims 3 and 10, characterized in that each switching element of a first stage (ISE11-14) has its inlets split- up into a first set and a second set of inlets respectively connected to said first and to said second set of inputs of said switching module (SM, SM′, SM″),

in that each switching element of the last stage (ISE21-24; ISE31-34) has its outlets split- up into a first set and a second set of outlets respectively connected to said first and to said second set of outputs of said switching module (SM, SM′, SM″), and

in that a cell is transferred through said switching module (SM, SM′, SM″) according to said first (A)/ second (B) transfer direction, or to said third (C)/ fourth (D) transfer direction according to a direction indicator included in the self- routing tag associated to said cell.

13. Communication switching module according to any of the previous claims, characterized in that it includes a control logic (UP) able to convert first routing mode parameters assigned to each type of cell transfer through a switching module of a particular module- stage of the switching network (SN) into second routing mode parameters assigned to each switching element (ISE) of this switching module in function of the internal arrangement of said switching elements (ISE) into said switching module and of the location of said switching module into said switching network (SN).

14. Communication switching module according to any of the previous claims, characterized in that said switching module is built on a printed board assembly carrying a plurality of switching elements (ISE).

15. Communication switching module according to any of the previous claims, characterized in that each of said switching elements (ISE) is built on an integrated electronic circuit.

16. Communication switching module according to any of the previous claims, characterized in that for each switching element (ISE) the number of inlets is equal to the number of outlets, and

in that for each switching module the number of inputs is equal to the number of outputs.

17. Communication switching module according to any of the previous claims, characterized in that said cells of information are packets of information.

18. Communication switching module according to the claims 13 and 14, characterized in that said printed board assembly onto which said switching module is built is plugged in a connector of the equipment of said switching network (SN) via which a first number corresponding to said module- stage wherein said switching module is then inserted is provided to said control logic (UP), said first number forming part of the identification of said location of said switching module into said switching network (SN).

19. Communication switching module according to claim 18, characterized in that a second number number allocated to the position of said switching module within said module- stage is also provided to said control logic (UP) via said connector, said second number forming part of the identification of said location of said switching module into said switching network (SN).

20. Communication switching module according to claim 18 or 19, characterized in that said control logic (UP) is associated to a network data memory (NDM) storing a set of all the possible said first routing mode parameters for each possible location of said switching module into said switching network (SN), and
    in that, according to said number received via said connector, said control logic (UP) selects, during an initialization phase of said switching network (SN), one of said first routing mode parameters stored in said network data memory (NDM) in order to convert them into said second routing mode parameters.

21. Communication switching module according to claim 20, characterized in that said network data memory (NDM) is a permanent memory.

22. Communication switching module according to claim 20, characterized in that said network data memory (NDM) is a random access memory wherein said set of all the possible said first routing mode parameters is loaded by means of control cells transferred through the switching network (SN) and received by a switching element (ISE) of said switching module (SM') which routes said control cell to said network data memory (NDM) thereof during said initialization phase of said switching network (SN).

**Patentansprüche**

1. Übertragungskoppelmodul (SM, SM', SM") mit Eingängen und Ausgängen, das in einer Modulstufe eines Mehrwege-Koppelnetzwerkes mit automatischer Wegewahl (SN) enthalten ist, das Eingangsanschlüsse und Ausgangsanschlüsse umfaßt, die an die Eingänge der Koppelmodule einer ersten Modulstufe bzw. an die Ausgänge der Koppelmodule einer letzten Modulstufe des Koppelnetzwerkes gekoppelt sind, wobei die Koppelmodule Datenzellen von einem beliebigen ihrer Eingänge zu mindestens einem ihrer Ausgänge übertragen können und aus Koppelelementen (ISE) aufgebaut sind, die jeweils über Einlässe und Ausgänge verfügen und die Datenzellen von einem beliebigen ihrer Einlässe zu mindestens einem ihrer Ausgänge übertragen können,
dadurch gekennzeichnet, daß jedes Koppelmodul (SM, SM', SM") eine Mehrzahl von Stufen (ISE11-14; ISE21-24; ISE31-34) von Koppelelementen (ISE) umfaßt, wobei die Eingänge und Ausgänge an Einlässe der Koppelelemente einer ersten Stufe (ISE11-14) bzw. an Ausgänge der Koppelelemente einer letzten Stufe (ISE21-24; ISE31-34) des Koppelmoduls (SM, SM', SM") gekoppelt sind,
daß jedes Koppelelement (ISE) über mindestens drei Ausgänge verfügt, und daß alle seine Ausgänge in Wegewahlgruppen angeordnet sind, von denen jede eine Anzahl von Ausgängen umfaßt, an die eine Zelle übertragen werden kann, daß das Koppelmodul (SM, SM', SM") über mindestens drei Ausgänge verfügt, und daß alle seine Ausgänge in Modul-Wegewahlgruppen angeordnet sind, von denen jede eine Anzahl von Ausgängen umfaßt, an die eine Zelle übertragen werden kann, wobei jede Modul-Wegewahlgruppe mindestens eine Wegewahlgruppe die mindestens ein Koppelelement der letzten Stufe (ISE21-24; ISE31-34) umfaßt,
daß die Koppelelemente einer gegebenen Stufe (ISE11-14; ISE21-24) an die Koppelelemente der folgenden Stufe (ISE21-24; ISE31-34) über Bündel von Li (8) Verbindungsleitungen gekoppelt sind, wobei jede der Verbindungsleitungen aus einer Ausgang/Eingang-Verbindung besteht, und daß Li (8) mindestens gleich der Anzahl der Ausgänge ist, die in der Wegewahlgruppe mit der kleinsten Anzahl an Ausgängen enthalten sind, die das Koppelelement ISE benötigt, um eine vorgegebene Mindestübertragungsleistung bei einer vorgegebenen Maximalbelastung der Ausgänge zu realisieren.

2. Übertragungskoppelmodul (SM, SM', SM") gemäß Anspruch 1, dadurch gekennzeichnet, daß jedes Koppelelement über Puffermittel zum Sperren der Zellen verfügt.

3. Übertragungskoppelmodul (SM, SM', SM") gemäß Anspruch 1, dadurch gekennzeichnet, daß jede Datenzelle einem automatischen Wegewahl-Kennzeichen mit Wegewahldaten zugeordnet ist, aus denen mindestens eine der Wegewahlgruppen in jedem Koppelelement (ISE) ausgewählt wird.

4. Übertragungskoppelmodul (SM, SM', SM") gemäß Anspruch 1, dadurch gekennzeichnet, daß jede Stufe (ISE11-14; ISE21-24; ISE31-34) k (4) Koppelelemente (ISE) umfaßt, von denen jede EO (32) Ausgänge hat,
daß jedes Koppelelement einer Stufe (ISE11-14; ISE21-24) mit jedem Koppelelement der folgenden Stufe (ISE21-24; ISE31-34) über Li (8) Verbindungsleitungen verbunden ist, und
daß Li (8) gleich EO (32) dividiert durch k (4) ist.

5. Übertragungskoppelmodul (SM) gemäß Anspruch 1, dadurch gekennzeichnet, daß das Koppelmodul (SM) drei Stufen (ISE11-14; ISE21-24; ISE31-34) umfaßt.

6. Übertragungskoppelmodul (SM) gemäß den Ansprüchen 4 und 5, dadurch gekennzeichnet, daß für jedes Koppelelement der ersten Stufe (ISE11-14) des Koppelmoduls (SM) die Übertragung von Datenzellen auf alle seine Ausgänge verteilt wird, wobei eine Zelle an ein beliebiges Koppelelement der zweiten Stufe (ISE21-24) des Koppelmoduls (SM) übertragen werden kann.

7. Übertragungskoppelmodul (SM) gemäß den Ansprüchen 3 und 6, dadurch gekennzeichnet, daß die Wegewahl der Zellen zu einer Zielmodul-Wegewahlgruppe durch die Ausführung einer Wegewahlfunktion für eine Wegewahlgruppe eines jeden Koppelelementes der zweiten (ISE21-24) und einer dritten Stufe (ISE31-34) des Koppelmoduls (SM) ausgeführt wird, wobei die Wegewahlfunktion vom automatischen Wegewahl-Kennzeichen abgeleitet wird, das der Zelle zugeordnet ist.

8. Übertragungskoppelmodul (SM') gemäß den Ansprüchen 3 und 4, dadurch gekennzeichnet, daß die Eingänge des Koppelmoduls (SM') in Eingangsgruppen (G01-32) mit je einer Anzahl Le (4) von Eingängen angeordnet sind, so daß eine Zelle, die an ein gegebenes Koppelmodul (SM') des Koppelnetzwerkes (SN) über eine gegebene Eingangsgruppe (G01/32) ausgegeben wird, an einem beliebigen der Le (4) Eingänge empfangen werden kann,
daß Le (4) ein Mehrfaches von k (4) ist,
daß eine Eingangsgruppe (G01/32) mit den k (4) Koppelelementen der ersten Stufe (ISE11-14) des Koppelmoduls (SM') über Le (4) dividiert durch k (4) Einlässe der einzelnen Koppelelemente der ersten Stufe (ISE11-14) verbunden ist, und
daß das Koppelmodul (SM') lediglich zwei Stufen (ISE11-14; ISE21-24) umfaßt, wobei die Wegewahl der Zellen zu einer Zielmodul-Wegewahlgruppe durch die Ausführung einer Wegewahlfunktion für eine Wegewahlgruppe eines jeden Koppelelementes der ersten (ISE11-14) und der zweiten Stufe (ISE21-24) des Koppelmoduls (SM') durchgeführt wird, wobei die Wegewahlfunktion vom automatischen Wegewahl-Kennzeichen abgeleitet wird, das der Zelle zugeordnet ist.

9. Übertragungskoppelmodul (SM") gemäß den Ansprüchen 3 und 4, dadurch gekennzeichnet, daß die Eingänge des Koppelmoduls (SM") in Eingangsgruppen (G01'/64') mit je einer Anzahl Le' (2) von Eingängen angeordnet sind, so daß eine Zelle, die an ein gegebenes Koppelmodul (SM") des Koppelnetzwerkes (SN) über eine gegebene Eingangsgruppe (G01'/64') ausgegeben wird, an einem beliebigen der Le' (2) Eingänge empfangen werden kann,
daß Le' (2) ein Bruchteil von k (4) ist,
daß eine Eingangsgruppe (G01'/64') mit Le' (2) Koppelelementen der ersten Stufe (ISE11-14) eines Koppelmoduls (SM") über einen einzelnen Eingang eines jeden Koppelelementes der ersten Stufe (ISE11-14) verbunden ist, und
daß das Koppelmodul (SM") lediglich zwei Stufen (ISE11-14; ISE21-24) umfaßt, wobei die Wegewahl der Zellen zu einer Zielmodul-Wegewahlgruppe durch die Ausführung einer Wegewahlfunktion für eine Wegewahlgruppe eines jeden Koppelelementes der ersten (ISE11-14) und zweiten Stufe (ISE21-24) des Koppelmoduls (SM") durchgeführt wird, wobei die Wegewahlfunktion aus dem automatischen Wegewahl-Kennzeichen abgeleitet wird, das der Zelle zugeordnet ist.

10. Übertragungskoppelmodul (SM, SM', SM") gemäß Anspruch 1, dadurch gekennzeichnet, daß die Eingänge und Ausgänge des Koppelmoduls (SM, SM', SM") jeweils in einen ersten Satz und einen zweiten Satz aufgeteilt sind, wobei eine Zelle entweder von einem Eingang des ersten/zweiten Satzes von Eingängen an einen Ausgang des ersten/zweiten Satzes von Ausgängen gemäß einer ersten (A)/zweiten (B) Übertragungsrichtung, oder von einem Eingang des ersten/zweiten Satzes von Eingängen an einen Ausgang des zweiten/ersten Satzes von Ausgängen gemäß einer dritten (C)/vierten (D) Übertragungsrichtung übertragen wird.

11. Übertragungskoppelmodul (SM, SM', SM") gemäß Anspruch 10, dadurch gekennzeichnet, daß die Einlässe und Ausgänge jedes Koppelelementes (ISE) in einen ersten Satz und einen zweiten Satz aufgeteilt sind, wobei eine Zelle entweder von einem Eingang des ersten/zweiten Satzes von Eingängen zu einem Ausgang des ersten/zweiten Satzes von Ausgängen gemäß der ersten (A)/ zweiten (B) Übertragungsrichtung, oder von einem Eingang des ersten/zweiten Satzes von Eingängen an einen Ausgang des zweiten/ersten Satzes von Ausgängen gemäß der dritten (C)/vierten (D) Übertragungsrichtung übertragen wird,
daß der erste/zweite Satz von Eingängen mit den ersten/zweiten Sätzen von Eingängen des Koppelelementes der ersten Stufe (ISE11-14) verbunden ist, und daß die ersten/zweiten Sätze von Ausgängen des Koppelelementes der letzten Stufe (ISE21-24; ISE31-34) eines Koppelmoduls (SM, SM', SM") mit dem ersten/zweiten Satz von Ausgängen verbunden sind.

12. Übertragungskoppelmodul (SM, SM', SM") gemäß den Ansprüchen 3 und 10, dadurch gekennzeichnet, daß die Einlässe jedes Koppelelementes einer ersten Stufe (ISE11-14) in einen ersten Satz und einen zweiten Satz von Eingängen aufgeteilt sind, die mit dem ersten bzw. dem zweiten Satz von Eingängen des Koppelmoduls (SM, SM', SM") verbunden sind,
daß die Ausgänge jedes Koppelelementes der letzten Stufe (ISE21-24,; ISE31-34) in einen ersten Satz und einen zweiten Satz aufgeteilt sind, die mit dem ersten bzw. zweiten Satz von Ausgängen des Koppelmoduls (SM, SM', SM") verbunden sind, und
daß eine Zelle durch das Koppelmodul (SM, SM', SM") gemäß einer ersten (A)/zweiten (B) Übertragungsrichtung oder gemäß einer dritten (C)/vierten (D) Übertragungsrichtung übertragen wird, in Übereinstimmung mit einem Richtungsanzeiger, der im automatischen Wegewahl-Kennzeichen enthalten ist, das der Zelle zugeordnet ist.

13. Übertragungskoppelmodul gemäß einem der vorhergehenden Ansprüche, dadurch gekennzeichnet, daß es eine Steuerlogik (UP) umfaßt, das erste Wegewahl-Modusparameter, die den einzelnen Zellenübertragungsarten durch ein Koppelmodul einer bestimmten Modulstufe des Koppelnetzwerkes (SN) zugeordnet werden, in zweite Wegewahl-Modusparameter umwandeln kann, die jedem Koppelelement (ISE) dieses Koppelmoduls für die interne Anordnung der Koppelelemente (ISE) in dem Koppelmodul und für die Positionierung des Koppelmoduls in dem Koppelnetzwerk (SN) zugeordnet werden.

14. Übertragungskoppelmodul gemäß einem der vorhergehenden Ansprüche, dadurch gekennzeichnet, daß das Koppelmodul auf einer Leiterplattenbaugruppe mit einer Mehrzahl von Koppelelementen (ISE) aufgebaut ist.

15. Übertragungskoppelmodul gemäß einem der vorhergehenden Ansprüche, dadurch gekennzeichnet, daß jedes Koppelelement (ISE) auf einem integrierten Elektronikschaltkreis aufgebaut ist.

16. Übertragungskoppelmodul gemäß einem der vorhergehenden Ansprüche, dadurch gekennzeichnet, daß für jedes Koppelelement (ISE) die Anzahl der Einlässe gleich der Anzahl der Ausgänge ist, und
daß für jedes Koppelmodul die Anzahl der Eingänge gleich der Anzahl der Ausgänge ist.

17. Übertragungskoppelmodul gemäß einem der vorhergehenden Ansprüche, dadurch gekennzeichnet, daß es sich bei den Datenzellen um Datenpakete handelt.

18. Übertragungskoppelmodule gemäß den Ansprüchen 13 und 14, dadurch gekennzeichnet, daß die Leiterplattenbaugruppe, auf die das Koppelmodul aufgebaut ist, in eine Steckverbindung der Geräte des Koppelnetzwerkes (SN) eingesteckt wird, über die eine erste Nummer, die der Modulstufe entspricht, in die das Koppelmodul eingesteckt wird, der Steuerlogik (UP) bereitgestellt wird, wobei die erste Nummer einen Teil der Kennzeichnung der Position des Koppelmoduls im Koppelnetzwerk (SN) darstellt.

19. Übertragungskoppelmodul gemäß Anspruch 18, dadurch gekennzeichnet, daß eine zweite Nummer, die der Position des Koppelmoduls innerhalb der Modulstufe entspricht, ebenfalls der Steuerlogik (UP) bereitgestellt wird, wobei die zweite Nummer, einen Teil der Kennzeichnung der Position des Koppelmoduls im Koppelnetzwerk (SN) darstellt.

20. Übertragungskoppelmodul gemäß den Ansprüchen 18 oder 19, dadurch gekennzeichnet, daß die Steuerlogik (UP) einem Netzwerkdatenspeicher (NDM) zugeordnet wird, der einen Satz aller möglichen ersten Wegewahl-Modusparameter für jede mögliche Position des Koppelmoduls im Koppelnetzwerk (SN) speichert, und
daß die Steuerlogik (UP) gemäß der Nummer, die über die Steckverbindung empfangen wird, während einer Initialisierungsphase des Koppelnetzwerkes (SN) einen der ersten Wegewahl-Modusparameter auswählt, die im Netzwerkdatenspeicher (NDM) gespeichert sind, um sie in zweite Wegewahl-Modusparameter umzuwandeln.

21. Übertragungskoppelmodul gemäß Anspruch 20, dadurch gekennzeichnet, daß der Netzwerkdatenspeicher (NDM) ein permanenter Speicher ist.

22. Übertragungskoppelmodul gemäß Anspruch 20, dadurch gekennzeichnet, daß der Netzwerkdatenspeicher (NDM) ein Schreib-Lese-Speicher ist, wobei der Satz mit allen möglichen ersten Parametern für den Wegewahlmodus durch Steuerzellenmittel geladen wird, die über das Koppelnetzwerk (SN) übertragen und von einem Koppelelement (ISE) des Koppelmoduls (SM′) empfangen werden, das die Steuerzelle während der Initialisierungsphase des Koppelnetzwerkes (SN) an den Netzwerkdatenspeicher (NDM) weiterleitet.

## Revendications

1. Unité de commutation de communications (SM, SM′, SM″) (ci-après appelée "unité de commutation"), dotée d'entrées et de sorties et incluse dans un étage d'unités de commutation d'un réseau de commutation à auto-acheminement et à trajets multiples possédant des points d'entrée et des points de sortie respectivement connectés aux entrées des unités de commutation d'un premier étage d'unités de commutation et aux sorties des unités de commutation d'un dernier étage d'unités dudit réseau de commutation, lesdites unités de commutation étant capables de transmettre des cellules d'information de l'une quelconque de leurs entrées à au moins une de leurs sorties et étant constituées d'éléments de commutation (ISE) ayant chacun des entrées et des sorties et étant chacun capable de transmettre lesdites cellules d'information de l'une quelconque de ses entrées à au moins une de ses sorties,

caractérisée par le fait que chaque unité de commutation (SM, SM′, SM″) comprend une pluralité d'étages (ISE11-14, ISE21-24, ISE31-34) desdits éléments de commutation (ISE), lesdites entrées et sorties étant respectivement connectées aux entrées des éléments de commutation d'un premier étage (ISE11-14) et aux sorties des éléments de commutation d'un dernier étage (ISE21-24, ISE31-34) de ladite unité de commutation (SM, SM′, SM″),

que chaque élément de commutation (ISE) a au moins trois sorties et que toutes ses sorties sont organisées en groupes d'acheminement comprenant chacun un certain nombre desdites sorties, une cellule pouvant être transmise à l'une quelconque d'entre elles,

que ladite unité de commutation (SM, SM′, SM″) a au moins trois sorties et que toutes ses sorties sont organisées en groupes d'acheminement d'unité comprenant chacun un certain nombre desdites sorties et une cellule pouvant être transmise à l'une quelconque d'entre elles, chaque groupe d'acheminement d'unité comprenant au moins un groupe d'acheminement d'au moins un élément de commutation dudit dernier étage (ISE21-24, ISE31-34),

que les éléments de commutation d'un étage donné (ISE11-14, ISE21-24) sont connectés aux éléments de commutation de l'étage suivant (ISE21-24, ISE31-34) par l'intermédiaire de faisceaux de Li (8) liaisons, chacune desdites liaisons étant constituée d'une connexion sortie-à-entrée et

que Li (8) est au moins égal au nombre de sorties, comprises dans le groupe d'acheminement ayant le plus petit nombre de sorties, que ledit élément de commutation (ISE) peut prendre en charge pour réaliser une performance de trafic minimal prédéterminée pour une charge maximale prédéterminée sur ses sorties.

2. Unité de commutation de communications (SM, SM′, SM″) conforme à la revendication 1, caractérisée par le fait que chaque élément de commutation est doté de dispositifs tampons pour mémoriser lesdites cellules.

3. Unité de commutation de communications (SM, SM′, SM″) conforme à la revendication 1, caractérisée par le fait que chaque cellule d'information est associée à une étiquette d'auto-acheminement comportant les données d'acheminement à partir desquelles au moins un desdits groupes d'acheminement est sélectionné dans chaque élément de commutation (ISE).

4. Unité de commutation de communications (SM, SM′, SM″) conforme à la revendication 1, caractérisée par le fait que chacun desdits étages (ISE11-14, ISE21-24, ISE31-34) contient un nombre k (4) desdits éléments de commutation (ISE) ayant chacun EO (32) sorties,

que chaque élément de commutation d'un étage (ISE11-14, ISE21-24) est connecté à chaque élément de commutation de l'étage suivant (ISE21-24, ISE31-34) par l'intermédiaire desdites Li (8) liaisons et

que Li (8) est égal à EO (32) divisé par k (4).

5. Unité de commutation de communications (SM) conforme à la revendication 1, caractérisée par le fait que ladite unité de commutation comprend trois étages (ISE11-14, ISE21-24, ISE31-34).

6. Unité de commutation de communications (SM) conforme aux revendications 4 et 5, caractérisée par le fait que , pour chacun des éléments de commutation dudit premier étage (ISE11-14) de ladite unité de commutation (SM), le trafic de cellules d'information est réparti entre toutes ses sorties, ce qui fait qu'une cellule peut être transmise à l'un quelconque des éléments de commutation du second étage (ISE21-24) de ladite unité de commutation (SM).

7. Unité de commutation de communications (SM) conforme aux revendications 3 et 6, caractérisée par le fait que l'acheminement des cellules vers un groupe d'acheminement d'unité de destination s'effectue en exécutant une fonction d'acheminement vers un groupe d'acheminement de chacun des éléments de commutation dudit second étage (ISE21-24) et d'un troisième étage (ISE31-34) de ladite unité de commutation (SM), ladite fonction d'acheminement étant dérivée de ladite étiquette d'auto-acheminement associée à ladite cellule.

8. Unité de commutation de communications (SM') conforme aux revendications 3 et 4, caractérisée par le fait que lesdites entrées de ladite unité de commutation (SM') sont organisées en groupes d'entrées (G01-32) comprenant chacun un nombre Le (4) desdites entrées, de telle sorte qu'une cellule arrivant à une unité de commutation (SM') donnée dudit réseau de commutation (SN) par l'intermédiaire d'un groupe d'entrées (G01/32) donné peut être reçue sur l'une quelconque des Le (4) entrées du groupe,

que Le (4) est un multiple de k (4),

qu'un groupe d'entrées (G01/32) est connecté aux k (4) éléments de commutation du premier étage (ISE11-14) de ladite unité de commutation (SM') par l'intermédiaire de Le (4) divisé par k (4) entrées de chacun desdits éléments de commutation dudit premier étage (ISE11-14) et

que ladite unité de commutation (SM') comprend seulement deux étages (ISE11-14, ISE21-24), dans lesquels l'acheminement des cellules vers un groupe d'acheminement d'unité de destination s'effectue en exécutant une fonction d'acheminement vers un groupe d'acheminement de chacun des éléments de commutation dudit premier étage (ISE11-14) et dudit second étage (ISE21-24) de ladite unité de commutation (SM'), ladite fonction d'acheminement étant dérivée de ladite étiquette d'auto-acheminement associée à ladite cellule.

9. Unité de commutation de communications (SM") conforme aux revendications 3 et 4, caractérisée par le fait que lesdites entrées de ladite unité de commutation (SM") sont organisées en groupes d'entrées (G01'-64') constitués chacun d'un nombre Le' (2) desdites entrées, de telle sorte qu'une cellule arrivant à une unité de commutation (SM") donnée dudit réseau de commutation (SN) par l'intermédiaire d'un groupe d'entrées (G01'/64') donné, peut être reçue sur l'une quelconque des Le' (2) entrées du groupe,

que Le' (2) est un sous-multiple de k (4),

qu'un groupe d'entrées (G01'/64') est connecté à Le' (2) éléments de commutation du premier étage (ISE11-14) d'une unité de commutation (SM") par l'intermédiaire d'une seule entrée de chacun desdits éléments de commutation dudit premier étage (ISE11-14) et

que ladite unité de commutation (SM") est seulement constituée de deux étages (ISE11-14, ISE21-24) dans lesquels l'acheminement des cellules vers un groupe d'acheminement d'unité de destination s'effectue en exécutant une fonction d'acheminement vers un groupe d'acheminement de chacun des éléments de commutation dudit premier étage (ISE11-14) et dudit second étage (ISE21-24) de ladite unité de commutation (SM"), ladite fonction d'acheminement étant dérivée de ladite étiquette d'auto-acheminement associée à ladite cellule.

10. Unité de commutation de communications (SM, SM', SM") conforme à la revendication 1, caractérisée par le fait que les entrées et les sorties de ladite unité de commutation (SM, SM', SM") sont divisées en un premier jeu et un second jeu, une cellule étant soit transmise d'une entrée du premier/second jeu d'entrées à une sortie du premier/second jeu de sorties selon une première (A)/deuxième (B) direction de transmission, soit transmises d'une entrée du premier/second jeu d'entrées à une sortie du second/premier jeu de sorties, selon une troisième (C)/quatrième (D) direction de transmission, respectivement.

11. Unité de commutation de communications (SM, SM', SM") conforme à la revendication 10, caractérisée par le fait que les entrées et les sorties de chaque élément de commutation (ISE) sont divisées en un premier jeu et un second jeu, une cellule étant soit transmise d'une entrée du premier/second jeu d'entrées à une sortie du premier/second jeu de sorties selon ladite première (A)/deuxième (B) direction de transmission, soit transmise d'une entrée du premier/second jeu d'entrées à une sortie du second/premier jeu de sorties, selon ladite troisième (C)/quatrième (D) direction de transmission, respectivement,

que ledit premier/second jeu d'entrées de l'unité est connecté auxdits premier/second jeux d'entrées des éléments de commutation du premier étage (ISE11-14) et que lesdits premier/second jeux de sorties des éléments de commutation du dernier étage (ISE21-24, ISE31-34) d'une unité de commutation (SM, SM', SM") sont connectés à son dit premier/second jeu de sorties, respectivement.

12. Unité de commutation de communications (SM, SM', SM") conforme aux revendications 3 et 10, caractérisée par le fait que les entrées de chaque élément de commutation d'un premier étage (ISE11-14) sont divisées en un premier jeu et un second jeu d'entrées, respectivement connectés au dit premier jeu et au dit second jeu d'entrées de ladite unité de commutation (SM, SM', SM"),

que les sorties de chaque élément de commutation du dernier étage (ISE21-24, ISE31-34) sont divisées en un premier jeu et un second jeu de sorties, respectivement connectés au dit premier jeu et au dit second jeu de sorties de ladite unité de commutation (SM, SM', SM") et

qu'une cellule est transmise à travers ladite unité de commutation (SM, SM', SM") selon ladite première (A)/deuxième (B) direction de transmission ou selon ladite troisième (C)/quatrième (D) direction de transmission, en fonction d'un indicateur de direction inclus dans l'étiquette d'auto-acheminement associée à ladite cellule.

13. Unité de commutation de communications conforme à l'une quelconque des revendications précédentes, caractérisée par le fait que ladite unité de commutation inclut une logique de gestion (UP) capable de convertir les premiers paramètres de mode d'acheminement, attribués à chaque type de transmission de cellule à travers une unité de commutation d'un étage d'unités particulier du réseau de commutation (SN), en seconds paramètres de mode d'acheminement, attribués à chaque élément de commutation (ISE) de cette unité de commutation en fonction de l'organisation interne desdits éléments de commutation (ISE) dans ladite unité de commutation et de l'emplacement de ladite unité de commutation dans ledit réseau de commutation (SN).

14. Unité de commutation de communications (SM, SM', SM") conforme à la revendication 1, caractérisée par le fait que ladite unité de commutation est construite sur une carte de circuit imprimé portant une pluralité d'éléments de commutation (ISE).

15. Unité de commutation de communications (SM, SM', SM") conforme à la revendication 1, caractérisée par le fait que chacun desdits éléments de commutation (ISE) est construit sous la forme d'un circuit électronique intégré.

16. Unité de commutation de communications conforme à l'une quelconque des revendications précédentes, caractérisée par le fait que pour chaque élément de commutation (ISE), le nombre d'entrées est égal au nombre de sorties et

que pour chaque unité de commutation, le nombre des points d'entrée est égal au nombre des points de sortie.

17. Unité de commutation de communications conforme à l'une quelconque des revendications précédentes, caractérisée par le fait que lesdites cellules d'information sont des paquets d'information.

18. Unité de commutation de communications conforme aux revendications 13 et 14, caractérisée par le fait que ladite carte de circuit imprimé sur laquelle ladite unité de commutation est montée est enfichée dans un connecteur de l'équipement dudit réseau de commutation (SN), par l'intermédiaire duquel un premier numéro correspondant au dit étage d'unités dans lequel ladite unité de commutation est insérée, est fourni à ladite logique de gestion (UP), ledit premier numéro faisant partie de l'identification dudit emplacement de ladite unité de commutation dans ledit réseau de commutation (SN).

19. Unité de commutation de communications conforme à la revendication 18, caractérisée par le fait qu'un second numéro attribué à l'emplacement de ladite unité de commutation à l'intérieur dudit étage d'unités est aussi fourni à ladite logique de gestion (UP) par l'intermédiaire dudit connecteur, ledit second numéro faisant partie de l'identification dudit emplacement de ladite unité de commutation dans ledit réseau de commutation (SN).

20. Unité de commutation de communications conforme à la revendication 18 ou 19, caractérisée par le fait que ladite logique de gestion (UP) est associée à une mémoire de données réseau (NDM) dans laquelle est enregistré un jeu de tous lesdits premiers paramètres de mode d'acheminement possibles pour chaque emplacement possible de ladite unité de commutation dans ledit réseau de commutation (SN) et

que, en fonction dudit numéro reçu par l'intermédiaire dudit connecteur, ladite logique de gestion (UP) sélectionne, au cours d'une phase d'initialisation dudit réseau de commutation (SN), l'un desdits premiers paramètres de mode d'acheminement enregistrés dans ladite mémoire de données réseau (NSM), afin de les convertir en lesdits seconds paramètres de mode d'acheminement.

21. Unité de commutation de communications conforme à la revendication 20, caractérisée par le fait que ladite mémoire de données réseau (NDM) est une mémoire permanente.

22. Unité de commutation de communications conforme à la revendication 20, caractérisée par le fait que ladite mémoire de données réseau (NDM) est une mémoire vive RAM dans laquelle ledit jeu de tous lesdits premiers paramètres de mode d'acheminement possibles est chargé au moyen de cellules de commande transmises à travers le réseau de commutation (SN) et reçu par un élément de commutation (ISE) de ladite unité de commutation (SM') qui achemine ladite cellule de commande jusqu'à ladite mémoire de données réseau (NDM) au cours de ladite phase d'initialisation dudit réseau de commutation (SN).

FIG. 1

SM

EP 0 446 492 B1

FIG.2

SM'

FIG.3 SN

FIG. 4

SM''

21

FIG.5

EP 0 446 492 B1

SM'

FIG.6